# EUROPÄISCHE PATENTANMELDUNG

(11) **EP 4 116 219 A1**
(43) Veröffentlichungstag der Anmeldung: **11.01.2023**
(21) Anmeldenummer: 21184301.6
(22) Anmeldetag: 07.07.2021
(51) Int. Cl.: B65D 75/36, C08J 5/18, C08L 23/06, C08L 23/12, C08L 27/06, C08F 210/02, C08F 232/04, C08L 23/08

(54) **VERWENDUNG EINES POLYMERGEMISCHES ZUR HERSTELLUNG EINER DECKELFOLIE FÜR EINE BLISTERPACKUNG**

(71) Anmelder: Perlen Packaging AG, Perlen, 6035 Perlen (CH)
(72) Erfinder: NEDELCU, Michael, 77652 Offenburg (DE); MAIENFISCH, Tobias, 6015 Luzern (CH)
(74) Vertreter: Lusuardi, Werther

(57) **Zusammenfassung**

Die Erfindung betrifft die Verwendung eines Polymergemisches zur Herstellung einer transparenten oder transluzenten, durchdrückbaren Deckelfolie (D) für eine Blisterpackung, wobei das Polymergemisch
A) eine erste Komponente K1 umfasst, welche ein cycloolefinisches Copolymer (COC) und/oder ein cycloolefinisches Polymer (COP) enthält; und
B) eine zweite Komponente K2 umfasst, welche zur Hauptsache entweder ein Polypropylen (PP) oder ein Polyvinylchlorid (PVC) oder ein Polyethylen mit hoher Dichte (HDPE) oder Mischungen davon enthält,
wobei das Gewichtsverhältnis zwischen der Komponente K1 und der Komponente K2 im Bereich von 1:5 bis 1:12 liegt.

## Beschreibung

Die Erfindung bezieht sich auf die Verwendung eines Polymergemisches zur Herstellung einer durchdrückbaren Deckelfolie für eine Blisterpackung gemäss dem Oberbegriff des Patentanspruchs 1, sowie einer Deckelfolie für eine Blisterpackung gemäss dem Oberbegriff des Anspruchs 13.

Verschiedene Typen von durchdrückbaren Deckelfolien für Blisterpackungen sind bereits bekannt. Je nach Aufbau der Folie und Zusammensetzung des zugrundliegenden Polymergemisches weisen diese bekannten Deckelfolien ein Anzahl Nachteile auf, wie z.B. mangelnde Transparenz und die Notwendigkeit der Verwendung einer zusätzlichen Metallfolie. Allen bekannten Deckelfolien haftet aber insbesondere der Nachteil an, dass die dazu verwendeten Polymergemische aufgrund ihrer physikalischen Festigkeit zu nicht-durchdrückbaren Folien führen und dass es deshalb notwendig ist den verwendeten Polymergemischen erhebliche Mengen an anorganischen Füllstoffen zuzusetzen, um dadurch eine Schwächung der auspolymerisierten Folie und damit ihre Durchdrückbarkeit zu erhalten. Die zugesetzten anorganischen Füllstoffe führen jedoch zu einer unerwünschten Opazität der Deckelfolien, welche sich auch nachteilig auf die Rezyklierbarkeit der Deckelfolien auswirkt.

Hier will die Erfindung Abhilfe schaffen. Der Erfindung liegt die Aufgabe zugrunde, ein Polymergemisch zu schaffen, welches sich zur Herstellung einer Deckelfolie für eine Blisterpackung eignet und auch ohne Zusätze von anorganischen Füllstoffen zu einer guten Transparenz oder Transluzenz, einer optimalen Durchdrückbarkeit und einer verbesserten Rezyklierbarkeit der erhaltenen Deckelfolie führt.

Die Erfindung löst die gestellte Aufgabe mit der Verwendung eines Polymergemisches, welche die Merkmale gemäss dem Anspruch 1 aufweist, sowie einer Deckelfolie, welche die Merkmale des Anspruchs 13 aufweist.

Die durch die Erfindung erreichten Vorteile sind im Wesentlichen darin zu sehen, dass dank der erfindungsgemässen Verwendung des Polymergemisches eine Deckelfolie für eine Blisterpackung herstellbar ist, welche folgende Vorteile vereint:
- hohe Transparenz/Transluzenz;
- frei von Metallfolien;
- gute Durchdrückbarkeit; und
- hohe Rezyklierbarkeit (> 95 % Monomaterial).

Weitere vorteilhafte Ausgestaltungen der Erfindung können wie folgt kommentiert werden:
Bei einer besonderen Ausführungsform besteht die Komponente K2 aus Polypropylen (PP) und das Gewichtsverhältnis zwischen der Komponente K1 und der Komponente K2 liegt im Bereich von 1:5 bis 1:9, vorzugsweise im Bereich von 1: 6 bis 1:8 .
Bei einer anderen Ausführungsform besteht die Komponenten K2 aus Polyvinylchlorid (PVC) und das Gewichtsverhältnis zwischen der Komponente K1 und der Komponente K2 liegt im Bereich von 1:7 bis 1:11, vorzugsweise im Bereich von 1:8 bis 1:10.
Bei einer weiteren Ausführungsform enthält das Polymergemisch einen maximalen Anteil an anorganischen Füllstoffen von 5 Gew.-%, vorzugsweise von maximal 1 Gew.-%.
Bei einer weiteren Ausführungsform enthält die Komponente K1 ein cycloolefinisches Copolymer (COC) und ein cycloolefinisches Polymer (COP) und das Gewichtsverhältnis zwischen COC und COP liegt im Bereich von 3:1 bis 1,4:1 , vorzugsweise im Bereich von 2,4 : bis 1,7:1 .

Der Gewichtsanteil des cycloolefinischen Copolymers am gesamten Polymergemisch beträgt zweckmässigerweise mindestens 9 Gew--%, vorzugsweise mindestens 13 Gew.-% .

Der Gewichtsanteil des cycloolefinischen Copolymers am gesamten Polymergemisch beträgt zweckmässigerweise höchstens 30 Gew--%, vorzugsweise höchstens 20 Gew.-%.

Der Gewichtsanteil des Polyvinylchlorids am gesamten Polymergemisch beträgt zweckmässigerweise mindestens 70 Gew--%, vorzugsweise mindestens 79 Gew.-% . Der Gewichtsanteil des Polyvinylchlorids am gesamten Polymergemisch beträgt zweckmässigerweise höchstens 90 Gew--%, vorzugsweise höchstens 85 Gew.-%.

Der Gewichtsanteil des Polypropylens am gesamten Polymergemisch beträgt zweckmässigerweise mindestens 75 Gew--%, vorzugsweise mindestens 80 Gew.-% . Der Gewichtsanteil des Polypropylens am gesamten Polymergemisch beträgt zweckmässigerweise höchstens 90 Gew--%, vorzugsweise höchstens 86 Gew.-% .

Der Gewichtsanteil des Polyethylens mit hoher Dichte (HDPE) am gesamten Polymergemisch beträgt zweckmässigerweise mindestens 72 Gew--%, vorzugsweise mindestens 78 Gew.-% .

Der Gewichtsanteil des Polyethylens mit hoher Dichte (HDPE) am gesamten Polymergemisch beträgt zweckmässigerweise höchstens 88 Gew--%, vorzugsweise höchstens 84 Gew.-%.

Durch die oben angegebenen bevorzugten Gewichtsanteile wird eine verbesserte Funktionalität der damit herstellbaren Deckelfolie erhalten.

Bei einer besonderen Ausführungsform weist das cycloolefinisches Copolymer ein gewichtsmittleres Molekulargewicht von mindestens 100'000 g/mol, vorzugsweise von mindestens 150'000 g/mol gemessen mittels Gelpermeationschromatographie auf. Zweckmässigerweise weist das cycloolefinisches Copolymer ein gewichtsmittleres Molekulargewicht von höchstens 200'000 g/mol, vorzugsweise von höchstens 160'000 g/mol gemessen mittels Gelpermeationschromatographie auf.

Die Erfindung betrifft auch eine Deckelfolie für eine Blisterpackung wobei die Deckelfolie aus einem erfindungsgemässen Polymergemisch besteht. Die Deckelfolie kann einlagig ausgebildet sein, vorzugsweise mit einer Dicke im Bereich von 50 - 100 µm.

Die Deckelfolie kann auch aus mindestens zwei Lagen unterschiedlicher Zusammensetzung bestehen, zum Beispiel einer ersten Lage bestehend aus einem erfindungsgemässen Polymergemisch und einer zweiten Lage mit einer von der ersten Lage unterschiedlichen Zusammensetzung als Aussenschicht.

Die zweite Lage besteht zweckmässigerweise aus mindestens 90 Gew.-%, vorzugsweise mindestens 95 Gew.-% Polypropylen.

Bei einer weiteren bevorzugten Ausführungsform umfasst die Deckelfolie eine dritte Lage mit einer von der ersten Lage unterschiedlichen Zusammensetzung als Siegelschicht und welche auf der, der zweiten Lage entgegengesetzten Seite der ersten Lage, auf letzterer aufgebracht ist.

Die dritte Lage besteht zweckmässigerweise mindestens aus 85 Gew.-%, vorzugsweise mindestens aus 90 Gew.-% Polypropylen.

Die Dicke der einzelnen Lagen liegt vorzugsweise im Bereich von 30 - 100 µm.

Die Deckelfolie weist zweckmässigerweise einen Metallanteil von höchstens 0,10 Gew.-%, vorzugsweise von höchstens 0,01 Gew.-% auf.

Bei einer bevorzugten Ausführungsform der Erfindung ist die Deckelfolie als Ganzes transparent.

Einlagige erfindungsgemässe Deckelfolien können vorteilhafterweise mittels eines Kalandrierungsverfahrens hergestellt werden. Mehrlagige erfindungsgemässe Deckelfolien können vorteilhafterweise mittels eines Koextrusionsverfahrens hergestellt werden.

Die Erfindung betrifft auch eine Durchdrückpackung mit einem Blisterbodenteil E und einer gegen das Blisterbodenteil gesiegelten erfindungsgemässen Deckelfolie.
Fig. 1 zeigt eine einlagige erfindungsgemässe Deckelfolie;
Fig. 2 zeigt den schematischen Schichtaufbau einer dreilagigen erfindungsgemässen Deckelfolie; und
Fig. 3 zeigt eine Durchdrückpackung mit einem Blisterbodenteil und einer gegen das Blisterbodenteil gesiegelten Deckelfolie gemäss der Erfindung.

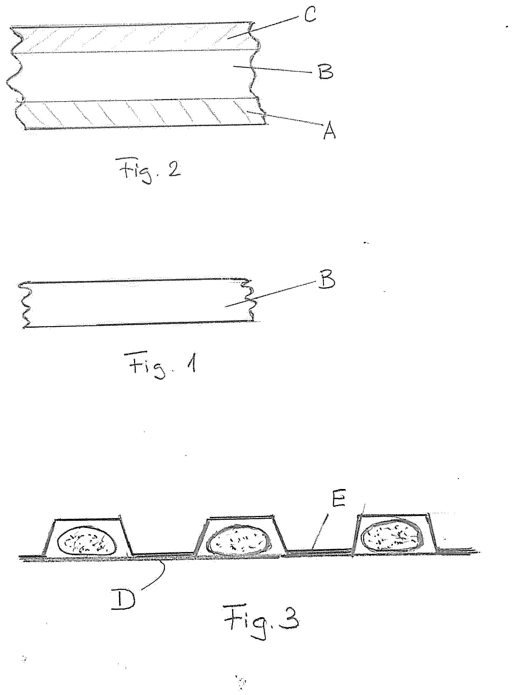

Die in Fig. 1 gezeigte einlagige Deckelschicht besteht allein aus einer Blendhauptschicht B mit einer Dicke von 50 bis 100 µm und besteht aus dem erfindungsgemässen Polymergemisch.

Die in Fig. 2 gezeigte 3-lagige Deckelschicht besteht aus einer Blendhauptschicht B gemäss dem erfindungsgemässen Polymergemisch, auf welche oben eine Aussenschicht C und unten eine Blend-Siegelschicht A aufgebracht ist.

Die in Fig. 3 schematisch gezeigte Durchdrückpackung weist einen Blisterbodenteil E und eine gegen das Blisterbodenteil E gesiegelte Deckelfolie D gemäss der Erfindung auf.

Die Erfindung und Weiterbildungen der Erfindung werden im Folgenden anhand mehrerer Ausführungsbeispiele noch näher erläutert.

### Beispiel 1 (einlagige Deckelfolie)

### 1a) Herstellung eines Polymergemisches für eine einlagige Deckelschicht

Im ersten Prozessschritt wurde die nachstehende Mischung gemäss Tabelle

| Stoff | Spezifikation | Gew.-Teile |
|---|---|---|
| Cycloolefinisches Copolymer (COC) | | 11 |
| Polyvinylchlorid (PVC) mit K-Wert 60 | | 84 |
| Organozinn-Stabilisator (für das PVC) | | 1,5 |
| Methylmethacrylat-Kopolymer und Esterwachse als PVC Verarbeitungshilfen | | 3,5 |
| **Total** | | **100,0** |

im Heissmischer auf 100°C erhitzt und anschliessend wieder abgekühlt.

### 1b) Herstellung einer einlagigen Deckelschicht

Die Mischung gemäss Beispiel 1a) wurde bei einer Massetemperatur von 185°C mittels Planetwalzenextruder homogenisiert und anschliessend auf einem Schmelzekalander bei einer Massetemperatur zwischen 185°C und 200°C zu zwei Folien unterschiedlicher Stärke von 100 µm und 60 µm kalandriert.

Für die beiden Folien konnten folgende physikalisch-mechanische Mittelwerte gemessen werden:

| Parameter | 100 µm Folie | 60 µm Folie |
|---|---|---|
| Dichte: | 1,23 g/cm³ | 1,23 g/cm³ |
| Schrumpfung bei 140°C/10min | -12,5 % + 1,5 % | -19,0 % + 5 % |
| Minimale Dicke | 99,0 µm | 57,7 µm |
| Maximale Dicke | 108,4 µm | 64,6 µm |
| Vicat-Erweichu ngstemperatur | 76,4 °C | 75,9 °C |
| Schlagzähigkeit | 105,4 kJ/m² | 179,8 kJ/m² |

### Beispiel 2 (einlagige Deckelfolie)

Dieses Beispiel ist analog zum Beispiel 1 jedoch basierend auf folgender Mischung:

| Stoff | Spezifikation | Gew.-Teile |
|---|---|---|
| Cycloolefinisches Copolymer (COC) | | 11,5 |
| Polyvinylchlorid-Kopolymer (PVC) mit K-Wert 57 | | 83,5 |
| Organozinn-Stabilisator (für das PVC) | | 1,5 |
| Methylmethacrylat-Kopolymer und Esterwachse als PVC Verarbeitungshilfen | | 3,5 |
| **Total** | | **100,0** |

### Beispiel 3 (dreilagige Deckelfolie auf Basis Polypropylen)

### 3a) Herstellung einer PP/COC-Mischung für die Hauptschicht B

15 Gewichtsteile zweier verschiedener Cycloolefincopolymere und 85 Gewichtsteile Polypropylen wurden gravimetrisch direkt in einen Extruder dosiert. Die Zusammensetzung der Durchdrückschicht B ist der folgenden Tabelle zu entnehmen.

| Stoff | Spezifikation | Gew.-Teile |
|---|---|---|
| Cycloolefinisches Copolymer (COC) | | 15 |
| Polypropylen (PP) | | 85 |
| **Total** | | **100,0** |

### 3b) Herstellung einer PP/COC - A/B/B-Durchdrückfolie

Die Extrusion erfolgte an einer PP-Castanlage als 3fach-Coextrusion bei 220°C. Es wurde ein A/B/B Schicht-Aufbau mit einer 10µm dicken A-Schicht sowie zwei B-Schichten (Hauptschichten) von 45µm und 10µm Dicke erzielt, in welchem die B-Schichten die der Erfindung zu Grunde liegenden Durchdrückschichten darstellen und die A-Schicht eine davon unabhängige Siegelschicht ist.

### 3c) Herstellung einer PP/COC - A/B/C-Durchdrückfolie

Die Extrusion erfolgte an einer PP-Castanlage als 3fach-Coextrusion bei 220°C. Es wurde ein A/B/B Schicht-Aufbau mit einer A-Schicht von 10µm, einer B-Schicht von 45µm und einer C-Schicht von 10µm Dicke erzielt, in welchem die B-Schicht die der Erfindung zu Grunde liegende Durchdrückschicht darstellt, die A-Schicht eine davon unabhängige Siegelschicht sowie die B-Schicht eine Polypropylen (PP)-Reinschicht ist.

### Beispiel 4 (dreilagige A/B/B bzw. A/B/C-Deckelfolie auf Basis PE-HD)

### 4a) Herstellung einer PE/COC-Mischung für die B-Schicht (Hauptschicht)

| Stoff | Spezifikation | Gew.-Teile |
|---|---|---|
| Cycloolefinisches Copolymer (COC) | | 15 |
| Polyethylen (PE) | | 85 |
| **Total** | | **100,0** |

Das cyclische Olefin, auf dem das cyclische Olefin-Copolymer basiert, ist vorzugsweise Norbornen.

Das acyclische Olefin ist vorzugsweise ausgewählt aus der Gruppe Ethylen, Propylen, Butylen oder Mischungen davon.

Besonders bevorzugt ist das cyclische Olefin-Copolymer bestehend aus ein Copolymer aus Norbornen und Ethylen. Das Norbornen kann in einer Menge von x = 10 bis 90 Molprozent und das Ethylen kann in einer Menge von y = 100 - x Molprozent vorhanden sein. Vorzugsweise ist das Norbornen in einer Menge von x = 15 bis 30 Molprozent und das Ethylen in einer Menge von y = 100 - x Molprozent vorhanden.

Das cyclische Olefin-Copolymer kann zweckmäßigerweise eine Wärmeformbeständigkeitstemperatur (HDT/B) von mindestens 50°C, vorzugsweise von mindestens 60°C und besonders bevorzugt von mindestens 75°C aufweisen.

Das zyklische Olefin-Copolymer kann gezielt eine Wärmeformbeständigkeitstemperatur (HDT/B) von höchstens 200°C, vorzugsweise von höchstens 100°C und besonders bevorzugt von höchstens 80°C aufweisen.

Die Schmelztemperatur des zyklischen Olefin-Copolymers kann zweckmäßigerweise mindestens 190°C, vorzugsweise mindestens 230°C betragen. Die Schmelztemperatur des zyklischen Olefin-Copolymers kann zweckmäßigerweise höchstens 320°C, vorzugsweise höchstens 250°C betragen.

Die Glasübergangstemperatur des zyklischen Olefin-Copolymers liegt zweckmäßigerweise im Bereich von 30° bis 200°.

Das Molekulargewicht des zyklischen Olefin-Copolymers ist zweckmäßigerweise höher als 50'000, vorzugsweise höher als 100'000. Das Molekulargewicht des zyklischen Olefin-Copolymers ist zweckmäßigerweise niedriger als 180'000, vorzugsweise niedriger als 150'000.

Das zyklische Olefin-Copolymer kann eine amorphe Struktur aufweisen.

Das zyklische Olefin-Copolymer hat zweckmäßigerweise eine Wasserdampfdurchlässigkeitsrate WVTR ≤ 0,5 g mm m-2 Tag-1 und vorzugsweise ≤ 0,3 g mm m-2 Tag-1, gemessen bei 75 % relativer Feuchtigkeitsdifferenz bei 40 °C.

Das zyklische Olefin-Copolymer hat zweckmäßigerweise eine Wasseraufnahme nach Eintauchen in Wasser für 24 Stunden bei 23 °C von weniger als 0,020 %, vorzugsweise von weniger als 0,012 %.

Das Polyvinylchlorid (PVC) weist voreilhafterweise einen K-Wert von mindestens 55 und maximal von 65 auf. Das Polyvinylchlorid (PVC) kann ein Polyvinylchlorid-Kopolymer oder ein Polyvinylchlorid-Terpolymer sein.

Obwohl wie oben beschrieben verschiedene Ausführungsformen der vorliegenden Erfindung vorliegen, sind diese so zu verstehen, dass die verschiedenen Merkmale sowohl einzeln als auch in jeder beliebigen Kombination verwendet werden können.

Diese Erfindung ist daher nicht einfach auf die oben erwähnten, besonders bevorzugten Ausführungsformen beschränkt.

## Patentansprüche

1. Verwendung eines Polymergemisches zur Herstellung einer transparenten oder transluzenten, durchdrückbaren Deckelfolie für eine Blisterpackung, wobei das Polymergemisch
A) eine erste Komponente K1 umfasst, welche ein cycloolefinisches Copolymer (COC) und/oder ein cycloolefinisches Polymer (COP) enthält; und
B) eine zweite Komponente K2 umfasst, welche zur Hauptsache entweder ein Polypropylen (PP) oder ein Polyvinylchlorid (PVC) oder ein Polyethylen mit hoher Dichte (HDPE) oder Mischungen davon enthält,
wobei das Gewichtsverhältnis zwischen der Komponente K1 und der Komponente K2 im Bereich von 1:5 bis 1:12 liegt.

2. Verwendung nach Anspruch 1, **dadurch gekennzeichnet, dass** die Komponente K2 aus Polypropylen (PP) besteht und das Gewichtsverhältnis zwischen der Komponente K1 und der Komponente K2 im Bereich von 1:5 bis 1:9, vorzugsweise von 1: 6 bis 1:8 liegt.

3. Verwendung nach Anspruch 1, **dadurch gekennzeichnet, dass** die Komponenten K2 aus Polyvinylchlorid (PVC) besteht und das Gewichtsverhältnis zwischen der Komponente K1 und der Komponente K2 im Bereich von 1:7 bis 1:11, vorzugsweise von 1:8 bis 1:10 liegt.

4. Verwendung nach einem der Ansprüche 1 bis 3, **dadurch gekennzeichnet, dass** die Komponente K1 ein cycloolefinisches Copolymer (COC) und ein cycloolefinisches Polymer (COP) enthält und das Gewichtsverhältnis zwischen COC und COP im Bereich von 3:1 bis 1,4:1 , vorzugsweise von 2,4 : bis 1,7:1 liegt.

5. Verwendung nach einem der Ansprüche 1 bis 4, **dadurch gekennzeichnet, dass** der Gewichtsanteil des cycloolefinischen Copolymers am gesamten Polymergemisch mindestens 9 Gew--%, vorzugsweise mindestens 13 Gew.-% beträgt.

6. Verwendung nach einem der Ansprüche 1 bis 5, **dadurch gekennzeichnet, dass** der Gewichtsanteil des cycloolefinischen Copolymers am gesamten Polymergemisch höchstens 30 Gew--%, vorzugsweise höchstens 20 Gew.-% beträgt.

7. Verwendung nach einem der Ansprüche 1 bis 6, **dadurch gekennzeichnet, dass** der Gewichtsanteil des Polyvinylchlorids am gesamten Polymergemisch mindestens 70 Gew--%, vorzugsweise mindestens 79 Gew.-% beträgt.

8. Verwendung nach einem der Ansprüche 1 bis 7, **dadurch gekennzeichnet, dass** der Gewichtsanteil des Polyvinylchlorids am gesamten Polymergemisch höchstens 90 Gew--%, vorzugsweise höchstens 85 Gew.-% beträgt.

9. Verwendung nach einem der Ansprüche 1 bis 8, **dadurch gekennzeichnet, dass** der Gewichtsanteil des Polypropylens am gesamten Polymergemisch mindestens 75 Gew-%, vorzugsweise mindestens 80 Gew.-% beträgt.

10. Verwendung nach einem der Ansprüche 1 bis 9, **dadurch gekennzeichnet, dass** der Gewichtsanteil des Polypropylens am gesamten Polymergemisch höchstens 90 Gew-%, vorzugsweise höchstens 86 Gew.-% beträgt.

11. Verwendung nach einem der Ansprüche 1 bis 10, **dadurch gekennzeichnet, dass** das cycloolefinisches Copolymer ein gewichtsmittleres Molekulargewicht von mindestens 100'000 g/mol, vorzugsweise von mindestens 150'000 g/mol gemessen mittels Gelpermeationschromatographie aufweist.

12. Verwendung nach einem der Ansprüche 1 bis 11, **dadurch gekennzeichnet, dass** das cycloolefinisches Copolymer ein gewichtsmittleres Molekulargewicht von höchstens 200'000 g/mol, vorzugsweise von höchstens 160'000 g/mol gemessen mittels Gelpermeationschromatographie aufweist.

13. Deckelfolie (D) für eine Blisterpackung wobei die Deckelfolie aus einem Polymergemisch gemäss einem der Verwendungsansprüche 1 bis 12 besteht.

14. Deckelfolie nach Anspruch 13, **dadurch gekennzeichnet, dass** sie aus mindestens zwei Lagen unterschiedlicher Zusammensetzung besteht, nämlich einer ersten Lage bestehend aus einem Polymergemisch gemäss einem der Verwendungsansprüche 1 bis 15 und einer zweiten Lage mit einer von der ersten Lage unterschiedlichen Zusammensetzung als Aussenschicht.

15. Deckelfolie nach Anspruch 13 oder 14, **dadurch gekennzeichnet, dass** sie eine dritte Lage mit einer von der ersten Lage unterschiedlichen Zusammensetzung als Siegelschicht umfasst und welche auf der, der zweiten Lage entgegengesetzten Seite der ersten Lage, auf letzterer aufgebracht ist.
